# EUROPÄISCHE PATENTSCHRIFT

(11) **EP 2 625 450 B1**
(45) Veröffentlichungstag und Bekanntmachung des Hinweises auf die Patenterteilung: **03.12.2014**
(21) Anmeldenummer: 11779594.8
(22) Anmeldetag: 05.10.2011
(51) Int. Cl.: F16K 1/12, F16K 31/04

(54) **ELEKTROMOTORISCH BETÄTIGTES VENTIL**
ELECTROMOTIVELY ACTUATED VALVE
SOUPAPE ÉLECTROMOTORISÉE

(30) Priorität: 08.10.2010 DE 102010048901
(43) Veröffentlichungstag der Anmeldung: 14.08.2013
(73) Patentinhaber: Schneider, Ewald, 74214 Schöntal - Bieringen (DE)
(72) Erfinder: MENZ, Friedrich, 74670 Forchtenberg (DE)
(74) Vertreter: Witte, Weller & Partner Patentanwälte mbB
(86) Internationale Anmeldenummer: PCT/EP2011/067364
(87) Internationale Veröffentlichungsnummer: WO 2012/045764

(56) Entgegenhaltungen:
- WO-A1-2009/021492
- DE-A1-102005 028 584
- US-A- 5 318 272
- US-B1- 6 321 776

## Beschreibung

Die vorliegende Erfindung betrifft ein elektromotorisch betätigtes Ventil mit einem Ventilgehäuse, an dem ein Eingangsanschluss und zumindest ein Ausgangsanschluss vorgesehen sind, zwischen denen sich ein Strömungskanal für ein durch das Ventil zu leitendes Medium erstreckt, und mit einem über einen Elektromotor betätigtes Stellglied, das zum Verschließen des Strömungskanals mit einer Ventilsitzfläche zusammenwirkt, wobei das Stellglied koaxial in dem Elektromotor angeordnet und derart mit dessen Rotor in Verbindung steht, dass eine Drehung des Rotors zu einer axialen Verstellung des Stellgliedes führt.

Ventile zum Regeln und Absperren von flüssigen oder gasförmigen Medien sind aus dem Stand der Technik vielfach bekannt. Die Ventile können als Koaxialventil mit in Strömungsrichtung des Mediums verschiebbarem Steuerrohr, als Magnetventil mit einer auf den Ventilsitz aufzudrückenden Membran oder als Ventil mit Absperrelement ausgebildet sein, das in den Strömungskanal eingeschoben wird, um diesen zu verschließen.

Die Betätigung von Steuerrohr, Membran oder Absperrelement, die im Rahmen der vorliegenden Erfindung gemeinsam als Stellglied bezeichnet werden, erfolgt dabei über Magnete, hydraulisch oder pneumatisch, sowie über Elektromotoren.

Die vorliegende Erfindung befasst sich mit der Weiterbildung von elektromotorisch betätigten Ventilen, insbesondere mit elektromotorisch betätigten Koaxialventilen.

Ein derartiges, allerdings nicht elektromotorisch betätigtes Koaxialventil ist beispielsweise aus der DE 101 08 492 A1 bekannt.

Die bekannten Koaxialventile werden zum Regeln und Absperren flüssiger oder gasförmiger Medien verwendet, wobei diese Medien chemisch aggressiv sein können und unter hohen oder tiefen Temperaturen sowie unter hohen Drücken vorliegen können. Vor diesem Hintergrund sind an derartige Koaxialventile hohe Anforderungen bezüglich der Dichtigkeit, mechanischen Zuverlässigkeit und Servicefreundlichkeit zu stellen.

Koaxialventile werden beispielsweise zur Versorgung von Werkzeugmaschinen mit Kühl-Schmiermitteln verwendet, die unter hohen Drücken zur Verfügung zugeführt werden.

Bei diesen Anwendungen kommen Koaxialventile deshalb zum Einsatz, weil sie vollständig druckentlastet sind, der anstehende Druck des zu transportierenden Mediums also keinen Einfluss auf das Schaltverhalten hat. Ferner durchfließt das zu steuernde Medium das Koaxialventil ohne nennenswerte Strömungsumlenkung in axialer Richtung, wobei der dem strömenden Medium entgegengesetzte Widerstand des Koaxialventils sehr gering ist.

Koaxialventile besitzen ein axial verschieblich in einem Ventilgehäuse gelagertes Steuerrohr, das von dem zu transportierenden Medium durchströmt wird. Das Steuerrohr wirkt mit einer Ventilsitzfläche zusammen, auf der das Steuerrohr in einer seiner axialen Endlagen derart aufliegt, dass das Koaxialventil verschlossen ist.

In seiner entgegengesetzten axialen Endlage ist das Steuerrohr zu der Ventilsitzfläche beabstandet, so dass das Medium frei durch das Koaxialventil hindurchströmen kann.

Die DE 199 60 330 A1 beschreibt ein Koaxialventil, bei dem das Steuerrohr über einen Hebelmechanismus verstellt wird, der von außerhalb des Ventilgehäuses über einen elektrischen Stellantrieb betätigt wird. Dieses Koaxialventil ist konstruktiv aufwändig und voluminös aufgebaut.

Die DE 10 2005 028 584 A1 beschreibt ein Koaxialventil, bei dem außen auf einem Abschnitt des Steuerrohrs eine äußere rillenförmige Wendelnut angeordnet ist, die mit einer rillenförmigen inneren Wendelnut im Eingriff steht, die innen an einer Antriebshülse vorgesehen ist, die das Steuerrohr koaxial umgibt. In den Wendelnuten laufen Kugeln, so dass Steuerrohr und Antriebshülse eine Art Kugelgewindetrieb bilden.

Die drehbar aber axial unverschieblich in dem Ventilgehäuse gelagerte Antriebshülse ist drehfest mit dem Rotor eines Elektromotors verbunden, der koaxial zu dem Steuerrohr in dem Ventilgehäuse angeordnet ist. Der den Rotor umgebende Stator ist drehfest im Ventilgehäuse gelagert. Auf diese Weise soll das bekannte Koaxilaventil einen kompakten Aufbau mit geringem Gewicht aufweisen. Dennoch ist der Aufbau insgesamt komplex und wenig servicefreundlich.

Einen vergleichbaren Aufbau weist ein aus der WO 2009/021492 A1 Koaxialventil auf. Bei diesem Koaxialventil ist zwischen Antriebshülse und Steuerrohr zusätzlich ein Federpaket angeordnet, über das das Steuerrohr in Schließstellung vorgespannt ist, so dass der Elektromotor in Schließstellung stromlos geschaltet werden kann und das Koaxialventil dennoch sicher geschlossen bleibt.

Das bekannte Koaxialventil ist zwischen Offenstellung und Schließstellung stufenlos verstellbar, wobei die Stellzeit zwischen zwei vorgegebenen Stellungen des Steuerrohres frei wählbar ist. Allerdings muss der Elektromotor in jeder Offenstellung des Koaxialventils aktiv gegen die Kraft des Federpaketes arbeiten, was einen entsprechend hohen Stromverbauch mit sich bringt.

Entsprechende Nachteile ergeben sich bei einem Proportionalventil klassischer Bauart, bei dem ein Elektromagnet eingesetzt wird, der gegen die Kraft einer Schließfeder arbeitet. Dieser Elektromagnet muss dauerhaft bestromt werden, um das Ventil geöffnet zu halten. Für die konstante Einstellung und Beibehaltung eines gewünschten Öffnungsgrades ist zudem eine aufwändige Regelung erforderlich.

Die EP 2 228 891 A2 erwähnt allgemein die Verwendung eines Elektromotors zur Betätigung eines Stellgliedes eines Ventils über eine Motorwelle, die durch den Rotor des Elektromotors axial verstellt werden kann.

Aufgrund der belastenden Einsatzbedingungen ist immer wieder zu beobachten, dass sich an dem Ventilsitz Verschmutzungen ansammeln, die zum einen ein sicheres Verschließen des Ventils verhindern, zum anderen aber auch das freie Durchströmen des Mediums durch das geöffnete Ventil beeinträchtigen. Zu diesem Zweck sind bekannte Koaxialventile demontierbar, um den Ventilsitz abnehmen und reinigen zu können.

Bei den bekannten Koaxialventilen lässt sich zu diesem Zweck ein Teil des Ventilgehäuses in Längsrichtung des Steuerrohres, also in Richtung des Fluidflusses, lösen und abnehmen, woraufhin dann die Ventilsitzfläche gereinigt oder der Ventilsitz insgesamt ausgetauscht werden kann.

Es hat sich nun herausgestellt, dass aufgrund der geometrischen Gegebenheiten dieses axiale Entfernen des Ventilsitzes häufig problematisch ist. Bevor eine Demontage des Ventilgehäuses möglich wird, muss das Ventilgehäuse selbst oft erst von der Maschine abgebaut werden, an der es montiert ist.

Die dann mögliche Reinigung der Ventilsitzflächen führt aber manchmal nicht zu dem gewünschten Erfolg, so dass der Ventilsitz insgesamt ausgetauscht werden muss. Hierzu muss der Ventilsitz von dem von dem Gehäuse abgenommenen Gehäuseteil abgeschraubt und ein neuer Ventilsitz aufgeschraubt werden, woraufhin dann das Gehäuseteil wieder an das Ventilgehäuse angeschraubt wird, das dann wieder an der über das Koaxialventil gesteuerten Maschine montiert werden muss.

Diese Maßnahmen sind insgesamt zeitaufwändig, so dass die dadurch bedingten Stillstandszeiten der gesteuerten Maschinen zusammen mit den Kosten für die Austauschteile eine erhebliche Kostenbelastung darstellen.

Um diese Probleme zu beseitigen, schlägt die auf den Anmelder der vorliegenden Erfindung zurückgehende, nicht vorveröffentliche DE 10 2009 060 785 vor, die Ventilsitzfläche an einem austauschbaren Dichtelement auszubilden, das in einer im Wesentlichen quer zu der Längsrichtung verlaufenden Öffnung des Ventilgehäuses angeordnet ist. Damit ist es nicht mehr erforderlich, den gesamten Ventilsitz zusammen mit einem Teil des Gehäuses zum Zwecke der Reinigung zu entfernen, sondern es ist möglich, ein Dichtelement so auszugestalten, dass es sozusagen quer zur Strömungsrichtung des transportierten Mediums aus dem Ventilgehäuse entnommen und nach dem Reinigen auch so wieder eingesetzt werden kann. Dazu ist das austauschbare Dichtelement in einer Öffnung des Ventilgehäuses angeordnet, die im Wesentlichen quer zu der Längsrichtung des Steuerrohres verläuft.

Weil zur Reinigung des Koaxialventiles nicht mehr der gesamte Ventilsitz demontiert werden muss, sind die Manipulationen erheblich einfacher durchzuführen, wobei auch die Reinigung eines einfachen Dichtelementes sehr viel schneller und effektiver vonstatten geht als bei einem gesamten Ventilsitz.

Darüber hinaus kann nach dem Herausnehmen des Dichtelementes auch der Strömungsweg in dem Ventilgehäuse schnell und einfach gereinigt werden, weil durch die Öffnung ein seitlicher Zugang zu dem Bereich des Ventilsitzes geschaffen wurde. Durch diese Öffnung kann auch die Stirnfläche des Steuerrohres geeinigt werden, die mit der Ventilsitzfläche zusammenwirkt.

Das in der nicht vorveröffentlichen DE 10 2009 060 785 beschriebene Koaxialventil, das über ein Steuermedium oder einen Elektromagneten betätigt wird, ist damit deutlich servicefreundlicher als die bekannten Koaxialventile.

Aus der US 5,318,272 A und der US 6,321,776 B1 sind über Schrittmotoren betätigte Ventile bekannt, bei denen ein Stellglied zusammen mit einem Abtriebsglied des Schrittmotors ein Schraubgetriebe bildet. Das Stellglied dient zum Verschließen einer Ventilsitzfläche.

Vor diesem Hintergrund liegt der vorliegenden Erfindung die Aufgabe zugrunde, ein Ventil der eingangs genannten Art derart weiterzubilden, dass es bei kompaktem und konstruktiv einfachem Aufbau energiesparend arbeitet und servicefreundlich ist.

Bei dem eingangs erwähnten Ventil wird diese Aufgabe erfindungsgemäß dadurch gelöst, dass an dem Stellglied ein Außengewinde und an dem Rotor ein im Eingriff mit dem Außengewinde befindliches Innengewinde vorgesehen ist, so dass das Stellglied und der Rotor ein Schraubgetriebe bilden, wobei Außengewinde und Innengewinde vorzugsweise ein selbsthemmendes Schraubgetriebe bilden, das Ventil als Koaxialventil und das Stellglied als in seiner Längsrichtung verschieblich in dem Ventilgehäuse gelagertes Steuerrohr ausgebildet ist, das mit dem Eingangsanschluss und dem Ausgangsanschluss derart zusammenwirkt, dass es bei geöffnetem Koaxialventil von dem Medium durchströmt wird, und das in einer seiner axialen Endlagen mit der Ventilsitzfläche zum Verschließen des Koaxialventils zusammenwirkt.

Die der Erfindung zugrunde liegende Aufgabe wird auf diese Weise vollkommen gelöst.

Der Erfinder der vorliegenden Anmeldung hat nämlich erkannt, dass diese Nachteile bei bekannten Ventilen durch den erfindungsgemäßen Einsatz eines Elektromotors vermieden werden können, der das Steuerrohr bzw. den Stößel über ein vorzugsweise selbsthemmendes Schraubgetriebe in die gewünschte Stellung verfährt. Das Schraubgetriebe ermöglicht nämlich einen konstruktiv einfacheren und noch platzsparenderen Aufbau als bei den aus der DE 10 2005 028 584 A1 und aus der WO 2009/021492 A1 bekannten Koaxialventilen.

Ist das Schraubgetriebe selbsthemmend, so kann der Elektromotor nach dem Öffnen oder Schließen des Ventils stromlos geschaltet werden, weil das Steuerglied durch axial auf das Steuerglied wirkende Kräfte nicht verschoben werden kann.

Die Erfindung lässt sich somit zum einen bei einem Koaxialventil mit einem axial angeordneten Elektromotor realisieren, bei dem das Medium axial durch den Elektromotor hindurchfließt, der zu diesem Zweck ein Steuerrohr aufnimmt, das er über Verdrehung des Rotors beliebig positionieren kann.

Andererseits kann der Elektromotor auch außeraxial angeordnet werden, beispielsweise quer zur Strömungsrichtung, und dabei ein Sperrelement betätigen, das mit einer Dichtfläche zusammenwirkt. Da der Elektromotor hier nicht von dem Medium durchströmt werden muss, lässt er sich ggf. noch kleiner konstruieren als bei einem axial angeordneten Elektromotor.

Durch die Wahl der Steigung des Gewindes zwischen dem durch den Motor angetriebenen Rotor sowie dem mit einem Außengewinde versehenen Steuerelement können auch Elektromotoren mit geringem Drehmoment hohe Kräfte aufwenden, so dass die neuen Ventile nicht nur Proportionalventile sondern auch Vorsteuerventile ersetzen können, bei denen über ein kleines Ventil das Medium gesteuert wird, über das dann der große Schließ- oder Öffnungsdruck aufgewendet wird.

In einem Ausführungsbeispiel ist es dann bevorzugt, wenn die Ventilsitzfläche einem austauschbaren Dichtelement ausgebildet ist, das in einer im Wesentlichen quer zu der Längsrichtung verlaufenden Öffnung des Ventilgehäuses angeordnet ist.

Unter "im Wesentlichen quer" wird im Rahmen der vorliegenden Anmeldung eine Ausrichtung verstanden, die zwar vorzugsweise senkrecht, also rechtwinklig zur Längsrichtung verläuft, aber auch schräg, also unter einem Winkel zu der Längsachse verlaufen, der weniger als 90° beträgt, aber oberhalb von 45° liegt.

Hier ist von Vorteil, dass die Ventilsitzfläche an einem von dem Ventilsitz seitlich entnehmbaren Dichtelement vorgesehen ist, das nicht nur leicht zu entnehmen und zu reinigen ist, sondern auch als preiswertes Massenteil hergestellt werden kann, das ohne hohe Kosten ausgetauscht werden kann. Andererseits kann das Dichtelement mit großer Genauigkeit und Maßhaltigkeit gefertigt werden, da es eine einfache geometrische Form aufweist. Dies erhöht u.a. die Servicefreundlichkeit des neuen Ventils.

In einem weiteren Ausführungsbeispiel ist es dann bevorzugt, wenn das Ventil als Koaxialventil und das Stellglied als in seiner Längsrichtung verschieblich in dem Ventilgehäuse gelagertes Steuerrohr ausgebildet ist, das mit dem Eingangsanschluss und dem Ausgangsanschluss derart zusammenwirkt, dass es bei geöffnetem Koaxialventil von dem Medium durchströmt wird, und das in einer seiner axialen Endlagen mit der Ventilsitzfläche zum Verschließen des Koaxialventils zusammenwirkt, wobei die Ventilsitzfläche an einem vorzugsweise austauschbaren Dichtelement ausgebildet ist, an dem umfänglich um eine Dichtelementachse verteilt zumindest zwei Ventilsitzflächen vorgesehen sind.

Das neue Koaxialventil ist auf diese Weise nicht nur sehr schnell und einfach zu warten, es ist auch konstruktiv sehr einfach aufgebaut und ermöglicht sozusagen die mehrfache Wiederverwendung des Dichtelementes, so dass nicht nur die Wartungskosten sondern auch die Ersatzteilkosten gegenüber den bekannten Koaxialventilen deutlich reduziert sind.

Je nach Durchmesser des Dichtelementes sowie Durchmesser des Steuerrohres können somit umfänglich um ein Dichtelement verteilt auch drei, vier, fünf oder sogar sechs Ventilsitzflächen vorgesehen sein, was eine entsprechend häufige Wiederverwendung des Dichtelementes möglich macht.

Das austauschbare Dichtelement mit den ggf. mehreren Ventilsitzflächen weist besondere Vorteile im Zusammenwirken mit dem über den Elektromotor betätigten Schraubgetriebe auf. Wegen der schnellen Austausch- bzw. Reinigungsmöglichkeit der Ventilsitzflächen kann auf kostengünstige und servicefreundliche Weise dafür gesorgt werden, dass saubere Ventilsitzflächen zur Verfügung stehen, die ein sicheres Schließen des Koaxialventils auch mit einem Schraubgetriebe ohne Federvorspannung ermöglichen. Bei einem selbsthemmenden Schraubgetriebe kann dann der Elektromotor auch in der Schließstellung stromlos geschaltet werden, was bei verschmutzen oder abgenutzten Ventilsitzflächen zu Problemen führen könnte.

Selbstverständlich kann bei dem neuen Ventil eine Sicherheitsfeder vorgesehen sein, die bei Stromausfall dafür sorgt, dass das Ventil in seine geschlossene oder geöffnete Stellung bewegt wird.

Allgemein ist es bevorzugt, wenn zumindest ein Teil des Ventilgehäuses einen Stator des Elektromotors bildet und dieser Teil des Ventilgehäuses koaxial zu dem Rotor angeordnet ist.

Hier ist von Vorteil, dass das neue Ventil extrem klein baut, denn der Stator bildet zumindest einen Teil des Ventilgehäuses, wobei die Motorwicklungen in diesem Teil des Ventilgehäuses angeordnet sind.

In einer Weiterbildung ist es dann bevorzugt, wenn das Dichtelement an einem Dichtelementhalter festgelegt ist, der lösbar an dem Ventilgehäuse befestigt ist, wobei das Dichtelement vorzugsweise auf einem Tragbolzen sitzt, der in der Öffnung angeordnet ist und an seinem einen Ende lösbar an dem Ventilgehäuse festgelegt und an seinem anderen Ende an dem Dichtelementhalter befestigt ist.

Diese Maßnahmen sind konstruktiv von Vorteil, der Dichtelementhalter trägt zum einen das Dichtelement selbst, sorgt zum anderen aber auch gleichzeitig für den Abschluss der in dem Ventilgehäuse vorgesehenen Öffnung nach außen, so dass bei geöffnetem Ventil kein Medium aus dem Ventilgehäuse austreten kann.

Wenn das Dichtelement auf einem Tragbolzen angeordnet ist, ist weiter von Vorteil, dass das Dichtelement in der Öffnung auf einfache Weise statisch abgestützt und gegen Durchbiegen geschützt ist. Auf diese Weise wird dafür gesorgt, dass im geschlossenen Zustand des Koaxialventils, in dem das Steuerrohr mit seiner Stirnfläche an der Ventilsitzfläche auf dem Dichtelement anliegt, das Dichtelement nicht verschoben oder verbogen wird. Mit anderen Worten, der Tragbolzen, der sich an seinem freien Ende beispielsweise an dem Boden der Öffnung in dem Ventilgehäuse abstützt und an seinem anderen Ende fest mit dem Dichtelementhalter verbunden ist, sorgt für eine genaue und dauerhaft feste Positionierung des Dichtelementes vor dem Steuerrohr.

Besondere Vorteile ergeben sich wieder mit dem ggf. selbsthemmenden Schraubgetriebe, weil eine dauerhaft feste Positionierung des Dichtelementes es erlaubt, auf Schließfedern zu verzichten und den Elektromotor ggf. auch in der Schließstellung stromlos oder auf einen geringeren Haltestrom zu schalten, was energetisch von Vorteil ist.

Dabei ist es allgemein bevorzugt, wenn das Dichtelement rotationssymmetrisch zu einer Dichtelementachse ausgebildet ist, wobei vorzugsweise an dem Dichtelement umfänglich um die Dichtelementachse verteilt zumindest zwei Ventilsitzflächen vorgesehen sind.

Bei dieser Maßnahme ist von Vorteil, dass durch einfaches Verdrehen des Dichtelementes um die Dichtelementachse ein anderer Bereich der Oberfläche des Dichtelementes als Ventilsitzfläche zur Verfügung gestellt wird. Mit anderen Worten, wenn die verwendete Ventilsitzfläche so nachhaltig verschmutzt ist, dass sie nicht mehr gereinigt werden kann, muss das Dichtelement nicht ausgetauscht werden, es wird vielmehr um die Dichtelementachse so weit verdreht, dass ein neuer Oberflächenbereich als Ventilsitzfläche zur Verfügung steht. Die synergetischen Effekte zusammen mit dem Schraubgetriebe wurden schon mehrfach erwähnt, sie ergeben sich in besonderer Weise auch durch diese Maßnahme.

Dabei ist es bevorzugt, wenn zwischen Ventilgehäuse und Dichtelement zumindest eine Positionieranordnung vorgesehen ist, die zumindest zwei umfängliche Ausrichtungen des Dichtelementes in dem Ventilgehäuse festlegt.

Bei dieser Maßnahme ist von Vorteil, dass die winkelmäßige Ausrichtung des Dichtelementes in dem Ventilgehäuse von vorneherein festgelegt ist, so dass nicht die Gefahr besteht, dass das Dichtelement nicht weit genug gedreht wurde, um die verschmutzte Ventilsitzfläche außer Eingriff mit dem Steuerrohr zu bringen. Ferner sorgt die Positionieranordnung dafür, dass die zur Verfügung stehende Oberfläche des Dichtelementes optimal ausgenutzt wird, das Dichtelement also nicht zu weit gedreht wird, wenn eine verschmutzte Ventilsitzfläche durch Drehen des Dichtelementes aus dem Bereich der Abdichtung herausgebracht wird.

Diese Positionieranordnung kann zwischen dem Dichtelement und dem Ventilgehäuse, dem Dichtelement und dem Dichtelementhalter oder dem Dichtelementhalter und dem Ventilgehäuse angeordnet sein. Wichtig ist dabei, dass nach dem Entfernen des Dichtelementhalters von dem Ventilgehäuse das noch an dem Dichtelementhalter sitzende Dichtelement genau so weit verdreht und dann wieder arretiert wird, dass eine neue Ventilsitzfläche zum Zusammenwirken mit dem Steuerrohr zur Verfügung gestellt wird.

Dabei ist es bevorzugt, wenn die Positionieranordnung einen Passstift umfasst, der an seinem einen Ende fest in einer ersten Bohrung sitzt und an seinem anderen Ende mit um die Dichtelementachse verteilt angeordneten zweiten Bohrungen zusammenwirkt.

Die zweiten Bohrungen sind dabei umfänglich so zueinander beabstandet, wie wirksame Ventilsitzflächen auf der Oberfläche des Dichtelementes vorgesehen sind.

Die zweiten Bohrungen können sowohl an dem Dichtelement als auch an dem Dichtelementhalter oder dem Ventilgehäuse vorgesehen sein, wobei vorzugsweise die zweiten Bohrungen an dem Dichtelement vorgesehen sind und der Passstift innen an dem Dichtelementhalter sitzt.

Bei Verschmutzung des erfindungsgemäßen Koaxialventils muss nun lediglich der Dichtelementhalter von dem Ventilgehäuse gelöst und zusammen mit dem Dichtelement aus der Öffnung in dem Ventilgehäuse herausgezogen werden. Danach wird das Dichtelement gereinigt und für den Fall, dass die bisher verwendete Ventilsitzfläche nicht mehr einsetzbar ist, auf dem Tragbolzen so weit von dem Dichtelementhalter entfernt, bis der Passstift außer Eingriff mit den zweiten Bohrungen gelangt. Dann wird das Dichtelement so weit verdreht, bis die nächste der zweiten Bohrungen dem Passstift gegenüberliegt, woraufhin das Dichtelement wieder vollständig auf den Tragbolzen aufgeschoben wird. Danach wird der Dichtelementhalter mit dem Dichtelement zuvorderst wieder auf die Öffnung aufgesetzt und dann an dem Ventilgehäuse verschraubt.

Durch diese einfachen Maßnahmen steht jetzt eine neue Ventilsitzfläche zum Zusammenwirken mit dem Steuerrohr zur Verfügung, ohne dass das Dichtelement selbst ausgetauscht werden musste. Auch durch diese Maßnahme ergeben sich in besonderer Weise die schon mehrfach erwähnten synergetischen Effekte zusammen mit dem Schraubgetriebe.

Dabei ist es noch bevorzugt, wenn die oder jede Ventilsitzfläche an einer Zylinderfläche, einer Kugelfläche, einer Kegelmantelfläche oder einer Planfläche des Dichtelementes ausgebildet ist.

Diese verschiedenen Formen der Ventilsitzfläche besitzen ihre jeweils besonderen Vorteile, sind an sich aber aus dem Stand der Technik bekannt.

Lediglich der Vollständigkeit halber sei abschließend noch erwähnt, dass auch die neuen Koaxialventile zu Mehrfachmodulen verblockt werden können, wobei die Eingangsanschlüsse und/oder Ausgangsanschlüsse an gemeinsame Fluidverteiler angeschlossen sein können.

Gerade bei dieser Verblockung zeigen sich die besonderen Vorteile des neuen Koaxialventils, denn das jeweilige Dichtelement kann jetzt seitlich aus dem jeweiligen Ventilgehäuse herausgenommen, gereinigt, ggf. gedreht oder ausgetauscht und danach wieder eingesetzt werden, ohne dass das komplette Ventilgehäuse demontiert werden muss. Es ist auch nicht erforderlich, die Ventilgehäuse aus der Verblockung herauszunehmen, bevor die Ventilsitzflächen gereinigt bzw. ausgetauscht werden können.

Zudem ist die Verblockung bei einem koaxial in dem Ventilgehäuse angeordneten Elektromotor besonders platzsparend möglich. Dennoch können die Dichtelemente wegen ihrer erfindungsgemäßen Anordnung leicht ausgetauscht oder gereinigt werden.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Ansicht eines Koaxialventils mit abgenommenem Dichtelementhalter und abgenommenem Dichtelement;
- Fig. 2: einen stark schematisierten Längsschnitt durch das Ventilgehäuse aus Fig. 1, gesehen längs der Linie II-II aus Fig. 3;
- Fig. 3: einen stark schematisierten Längsschnitt durch das Ventilgehäuse aus Fig. 1, gesehen längs der Linie III-III aus Fig. 2;
- Fig. 4: eine Darstellung wie Fig. 3, jedoch mit geöffnetem Koaxialventil;
- Fig. 5: eine perspektivische Ansicht des Dichtelementhalters, mit vier perspektivisch dargestellten Dichtelementen, die wahlweise auf den Tragbolzen des Dichtelementhalters aufgeschoben werden können;
- Fig. 6: eine Darstellung wie in Fig. 2, jedoch mit einem erfindungsgemäß vorgesehenen Elektromotor zur Betätigung des Steuerrohres, oben im geschlossenen und unten im geschlossenen Zustand.

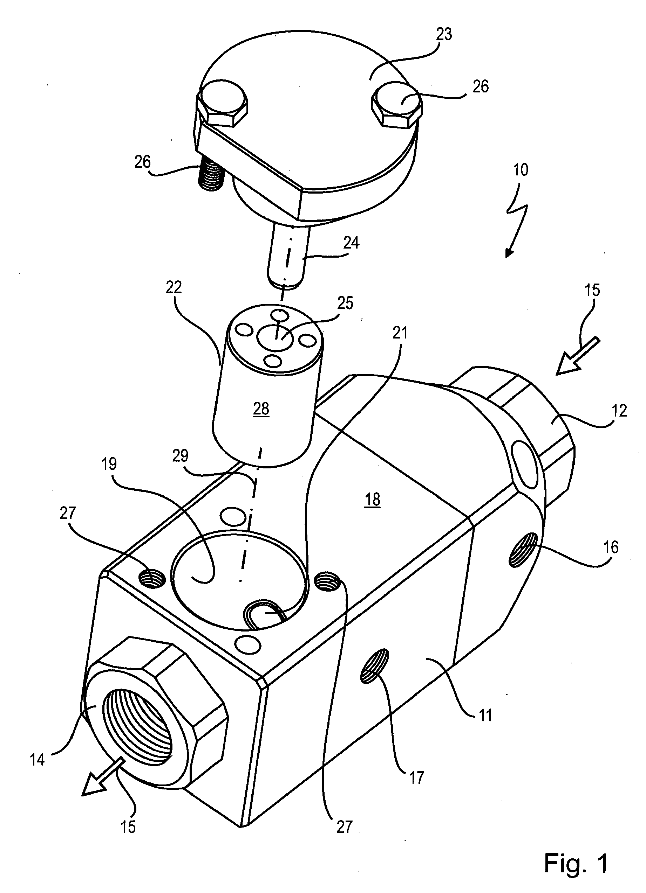

Fig. 1 zeigt in perspektivischer Darstellung von oben schematisch und nicht maßstabsgetreu ein Koaxialventil 10 mit einem Ventilgehäuse 11, an dem ein Eingangsanschluss 12 und ein Ausgangsanschluss 14 für ein durch das Koaxialventil 10 zu leitendes Medium vorgesehen sind, das durch Pfeile 15 symbolisiert ist.

Eingangsanschluss 12 und ein Ausgangsanschluss 14 sind als Schraubanschlüsse ausgebildet, über die das Koaxialventil 10 mit Verteilerrohren für das Medium 15 verbunden werden kann, wobei mehrere Koaxialventile 10 nebeneinander angeordnet und somit "verblockt" werden können, wie dies aus dem Stand der Technik allgemein bekannt ist.

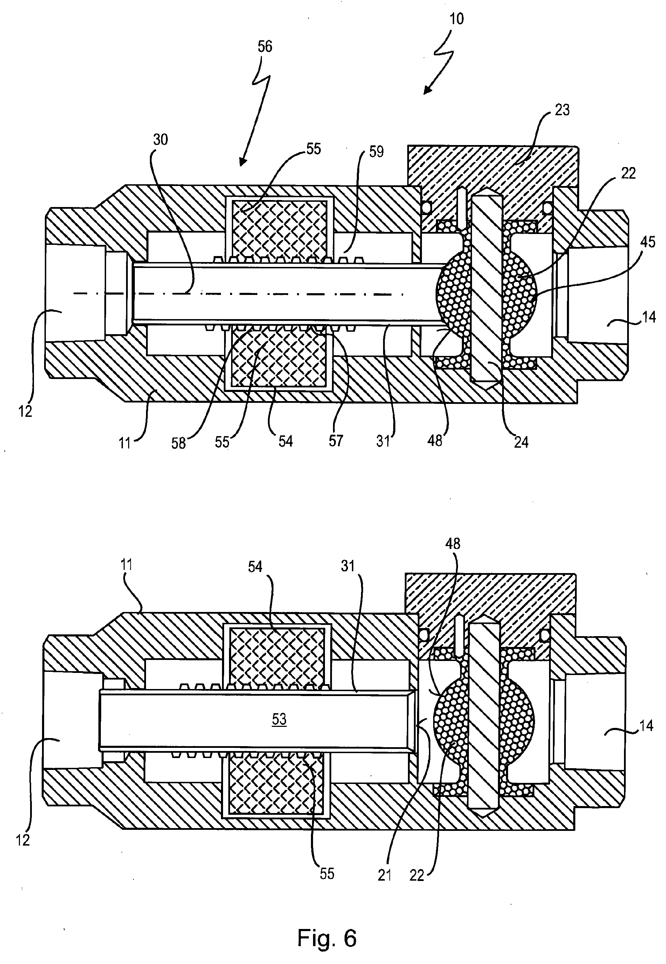

Seitlich an dem Ventilgehäuse 11 sind ein erster Steueranschluss 16 sowie ein zweiter Steueranschluss 17 vorgesehen, über die in noch zu beschreibender Weise Steuermedium in das Innere des Ventilgehäuses 11 geleitet wird, um das Koaxialventil 10 zu öffnen bzw. zu schließen, oder Anschlüsse für einen Elektromotor in das Innere geführt werden, wie es für das Ausführungsbeispiel der Fig. 6 verwendet werden kann.

Das Ventilgehäuse 11 weist an seiner Oberseite 18 eine Öffnung 19 auf, die quer zu der Strömungsrichtung des Mediums 15 zwischen Eingangsanschluss 12 und Ausgangsanschluss 14 verläuft.

Unten in der Öffnung 19 ist ein stirnseitiges Ende 21 eines in Fig. 1 nicht weiter zu erkennenden Steuerrohres dargestellt, das im geschlossenen Zustand des Koaxialventils 10 mit einem oberhalb der Öffnung 19 dargestellten Dichtelement 22 in Anlage gelangt.

Oberhalb des Dichtelementes 22 ist ein Dichtelementhalter 23 vorgesehen, von dem nach unten ein Tragbolzen 24 hervorsteht, auf den das Dichtelement 22 mit seiner Durchgangsöffnung 25 aufgeschoben werden kann.

Beim Montieren des Dichtelementes 22 sowie des Dichtelementhalters 23 an dem Ventilgehäuse 11 wird zunächst das Dichtelement 22 auf den Tragbolzen 24 aufgeschoben. Danach wird das Dichtelement 22 in die Öffnung 19 eingeführt, wodurch der Dichtelementhalter 23 auf der Oberseite 18 des Ventilgehäuses 11 zu liegen kommt. Danach wird der Dichtelementhalter 23 mit Schrauben 26 an dem Ventilgehäuse 11 befestigt, wozu in der Oberseite 18 Gewindebohrungen 27 vorgesehen sind.

Selbst wenn das Koaxialventil 10 jetzt an seinem Eingangsanschluss 12 und/oder an seinem Ausgangsanschluss 14 mit weiteren Koaxialventilen 10 verblockt und an gemeinsame Medienleitungen angeschlossen wird, kann doch das Dichtelement 22 jederzeit herausgenommen und gereinigt sowie ggf. ausgetauscht werden. Dazu ist es lediglich erforderlich, die Schrauben 26 zu lösen und den Dichtelementhalter 23 mit dem von ihm getragenen Dichtelement 22 von dem Ventilgehäuse 11 abzuziehen.

Danach kann das Dichtelement 22 von dem Tragbolzen 24 heruntergenommen und gereinigt werden. Gleichfalls ist es möglich, durch die Öffnung 19 hindurch das Innere des Ventilgehäuses 11, insbesondere das stirnseitige Ende 21 des in Fig. 1 nicht dargestellten Steuerrohres, zu reinigen. Gleichfalls lässt sich problemlos der Durchfluss im Ausgangsanschluss 14 reinigen, ohne dass der Ausgangsanschluss 14 weiter demontiert werden muss.

Nachdem das Dichtelement 22 gereinigt und ggf. ausgetauscht wurde, wird es wieder auf den Tragbolzen 24 aufgeschoben und danach in bereits beschriebener Weise zusammen mit dem Dichtelementhalter 23 in den bzw. an dem Ventilgehäuse 11 montiert.

Das Dichtelement 22 gemäß Fig. 1 kann in unterschiedlichen winkelmäßigen Ausrichtungen auf den Tragbolzen 24 aufgesteckt werden, so dass unterschiedliche Bereiche seiner Mantelfläche 28 als Ventilsitzfläche für das stirnseitige Ende 21 zur Verfügung stehen.

In Fig. 1 ist mit 29 noch eine Dichtelementachse bezeichnet, die die Symmetrieachse des rotationssymmetrischen Dichtelementes 22 darstellt, das in dem gezeigten Ausführungsbeispiel zylinderförmig ausgebildet ist. In Richtung der Dichtelementachse 29 wird das Dichtelement 22 aus dem Ventilgehäuse 11 herausgezogen bzw. in dieses wieder eingesetzt.

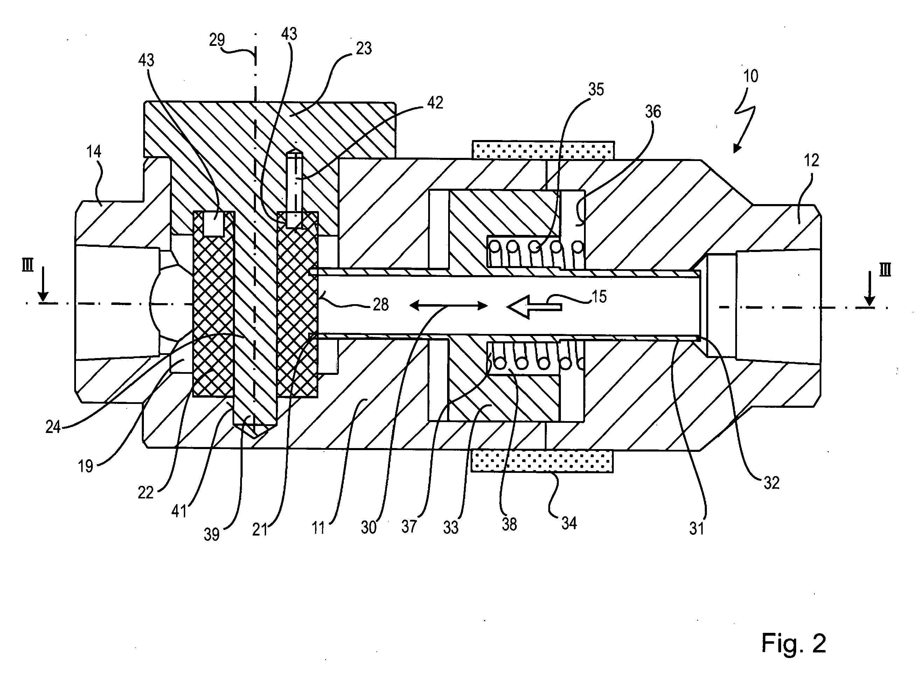

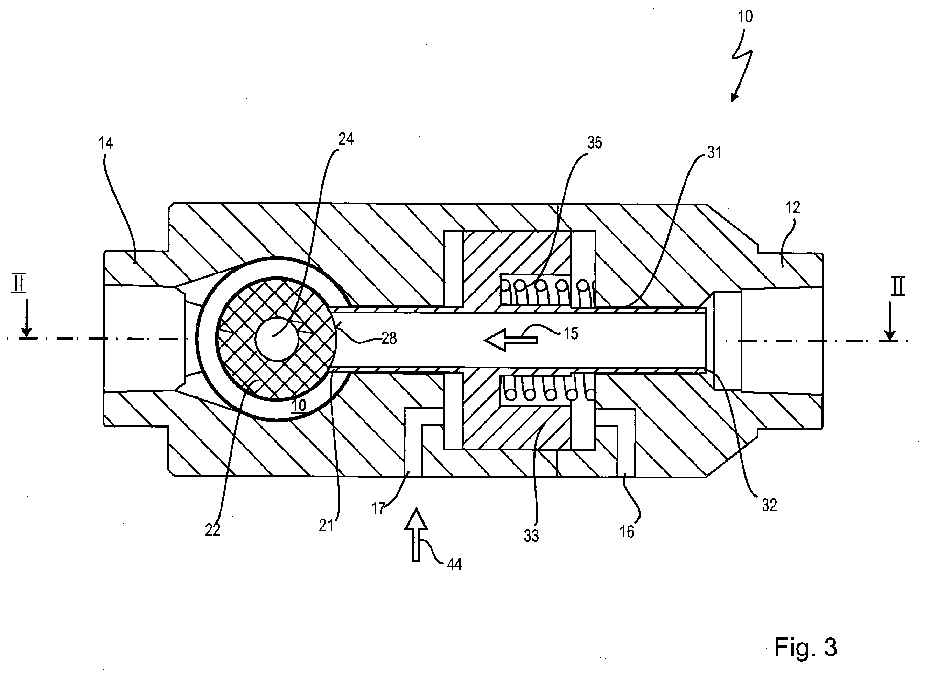

Fig. 2 zeigt einen stark schematisierten Längsschnitt durch das Koaxialventil 10 aus Fig. 1, gesehen längs der Linie II-II aus Fig. 3, die wiederum einen schematischen Längsschnitt längs der Linie III-III aus Fig. 2 darstellt.

Mit anderen Worten, die Fig. 3 stellt einen Längsschnitt parallel zu der Oberseite 18 dar, während die Fig. 2 einen Längsschnitt quer zur Oberseite 18, also parallel zu einer der beiden Seitenflächen des Ventilgehäuses 11, zeigt.

Die Schnittdarstellungen der Figuren 2 bis 4 sind sehr schematisch, sie zeigen lediglich die wesentlichen Elemente des Koaxialventils 10.

In Fig. 2 ist zunächst zu erkennen, dass in dem Ventilgehäuse 11 in Längsrichtung 30 verschieblich ein bereits im Zusammenhang mit Fig. 1 erwähntes Steuerrohr 31 gelagert ist. Dieses Steuerrohr 31 erstreckt sich von dem Eingangsanschluss 12 zu dem Dichtelement 22 und führt das Medium 15. In der in Fig. 2 gezeigten Schließstellung des Koaxialventils 10 liegt das Steuerrohr 31 mit seinem stirnseitigen Ende 21 auf der Mantelfläche 28 des Dichtelementes 22 auf. An seinem anderen Ende 32 steht das Steuerrohr 31 mit dem Eingangsanschluss 12 in Verbindung.

An dem Steuerrohr 31, das als Hülse ausgebildet ist, ist ein Kolben 33 vorgesehen, der in dem Ausführungsbeispiel der Fig. 2 als Anker für einen Elektromagneten 34 dient.

In dem Ventilgehäuse 11 ist noch eine Ventilfeder 35 angeordnet, die sich einen Endes an einer inneren Stirnseite 36 des Ventilgehäuses 11 abstützt und anderen Endes an einer Stirnseite 37 in einer Sacklochbohrung 38 des Kolbens 33 abstützt. Auf diese Weise drückt die Ventilfeder 35 den Kolben 33 in Fig. 2 nach links, also in die geschlossene Stellung des Koaxialventils 10.

In dieser Stellung liegt das stirnseitige Ende 21 des Steuerrohres 31 so auf der Mantelfläche 28 des Dichtelementes 22 an, dass Medium 15 nicht aus dem Steuerrohr 31 austreten kann.

Wird jetzt der Elektromagnet 34 mit Strom beaufschlagt, so zieht er den als Anker wirkenden Kolben 33 in Fig. 2 für 3 bis 5 mm gegen die Kraft der Ventilfeder 35 in Längsrichtung 30 nach rechts, so dass das stirnseitige Ende 21 des Steuerrohres 31 von der Mantelfläche 28 des Dichtelementes 22 abhebt. Dieser Hub ist abhängig von der Nennweite, wobei ein Hub von 3 - 5 mm beispielsweise für eine Nennweite des Eingangs- und Ausgangsanschlusses von 10 mm eingestellt wird.

Medium 15 kann jetzt in die Öffnung 19 und von dieser zu dem Ausgangsanschluss 14 strömen.

In Fig. 2 ist noch zu erkennen, dass der das Dichtelement 22 tragende Tragbolzen 24 mit seinem freien Ende 39 in einer Sackbohrung 41 des Ventilgehäuses 11 steckt. Auf diese Weise ist der Tragbolzen 24 lösbar an dem Ventilgehäuse 11 festgelegt. Da der Tragbolzen 24 andererseits fest mit dem Dichtelementhalter 23 verbunden ist, stützt er bei an das Ventilgehäuse 11 angeschraubtem Dichtelementhalter 23 das Dichtelement 22 derart ab, dass es auch unter starkem Druck des Mediums 15 nicht verbiegt sondern in seiner Position verbleibt, in der es sicher mit dem stirnseitigen Ende 21 des Steuerrohres 31 zusammenwirkt.

Wie bereits erwähnt, ist das zylinderförmige Dichtelement 22 rotationssymmetrisch zu der Dichtelementachse 29 ausgebildet, so dass es in beliebiger Winkellage um die Dichtelementachse 29 herum auf den Tragbolzen 24 aufgesteckt werden kann.

Auf diese Weise ist es möglich, nach dem Demontieren des Dichtelementes 22 dieses um einen bestimmten Winkelbetrag auf dem Tragbolzen 24 zu verdrehen, so dass ein neuer Bereich seiner Oberfläche 28 mit dem stirnseitigen Ende 21 des Steuerrohres 31 zusammenwirkt, wenn das Dichtelement 22 wieder in dem Ventilgehäuse 11 montiert wurde.

Um die Oberfläche 28 des Dichtelementes 22 optimal ausnutzen zu können, ist zwischen dem Ventilgehäuse 11 und dem Dichtelement 22 eine Positionieranordnung vorgesehen, die durch einen Passstift 42 gebildet ist, der fest in einer ersten Bohrung in dem Dichtelementhalter 23 sitzt und wahlweise in zweite Bohrungen 43 des Dichtelementes 22 eingreifen kann. Die Verteilung der zweiten Bohrungen 43 in dem Dichtelement 22 um die Dichtelementachse 39 herum bestimmt somit die verschiedenen Bereiche der Mantelfläche 28, die als Ventilsitzfläche mit dem stirnseitigen Ende 21 zusammenwirken können.

In Fig. 3 ist das Koaxialventil 10 aus Fig. 1 in einem Schnitt parallel zu der Oberseite 18 dargestellt.

Bei dem Koaxialventil 10 aus Fig. 3 ist statt des Elektromagneten 34 jetzt als Steuervorrichtung zum Bewegen des Kolbens 33 ein Steuermedium 44 vorgesehen, das wahlweise über die Steueranschlüsse 16 oder 17 in das Ventilgehäuse 11 geleitet werden kann.

Wird Steuermedium 44 in den ersten Steueranschluss 16 geleitet, drückt dieses den Kolben 33 nach links und schließt, unterstützt durch die Ventilfeder 35, das Koaxialventil 10, indem das Steuerrohr 31 mit seinem stirnseitigen Ende 21 auf die durch die Mantelfläche 28 gebildete Ventilsitzfläche des Dichtelementes 22 gedrückt wird.

Wird dagegen Steuermedium 44 durch den zweiten Steueranschluss 17 in das Innere des Ventilgehäuses 11 geleitet, so wird das Koaxialventil 10 geöffnet, der Kolben 33 also in Fig. 3 gegen die Kraft der Ventilfeder 35 nach rechts bewegt, so dass das stirnseitige Ende 21 außer Eingriff mit der Mantelfläche 28 gelangt.

Medium 15 kann jetzt aus dem Steuerrohr 31 in die Öffnung 19 und von dort zu dem Ausgangsanschluss 14 gelangen.

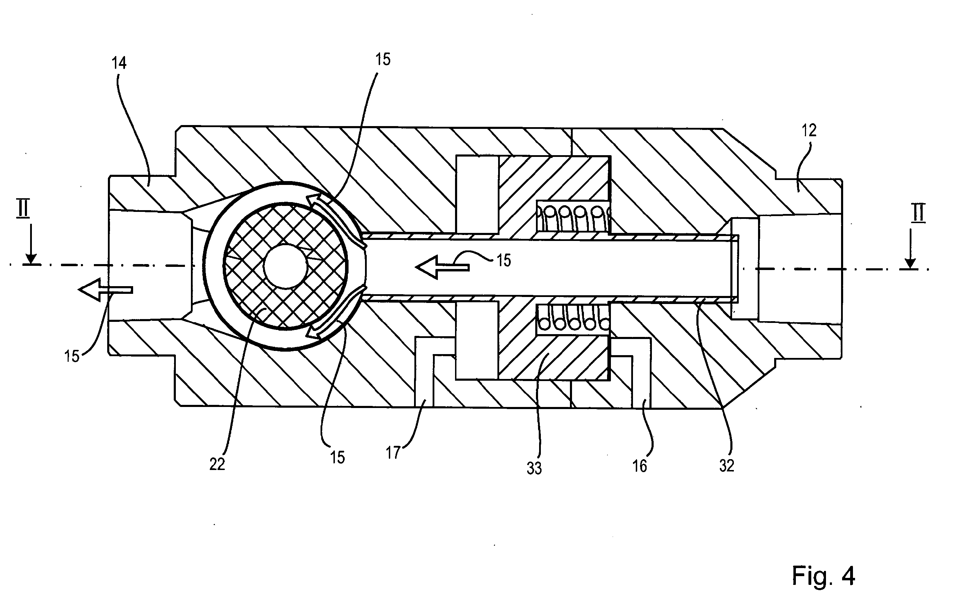

Dieser Zustand ist in Fig. 4 dargestellt.

Fig. 3 zeigt also das Steuerrohr 31 in seiner einen axialen Endlage, in der das Koaxialventil 10 geschlossen ist, während Fig. 4 das Steuerrohr 31 in seiner anderen axialen Endlage zeigt, in der das Koaxialventil 10 geöffnet ist.

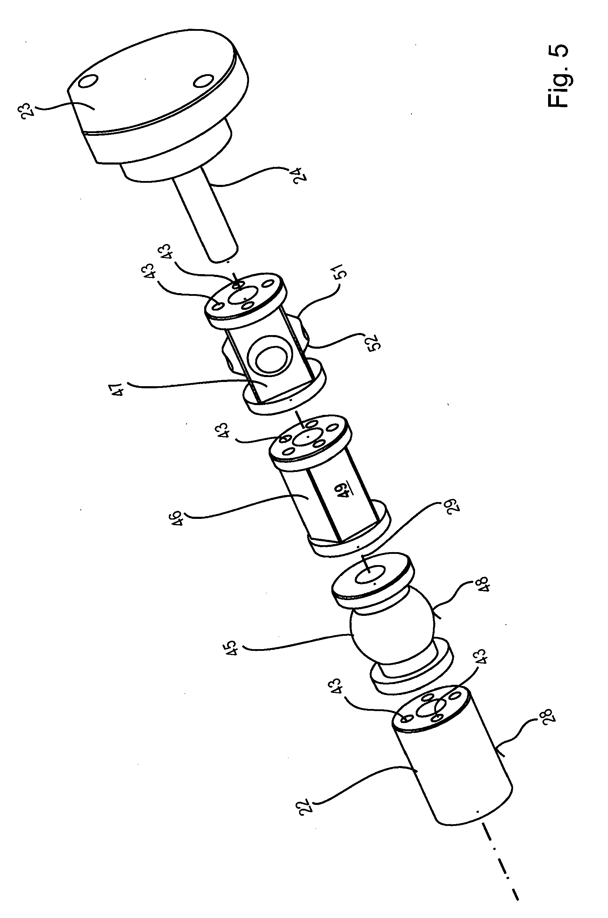

In Fig. 5 ist der Dichtelementhalter 23 mit Tragbolzen 24 perspektivisch dargestellt, wobei längs der Dichtelementachse 29 vier verschiedene Dichtelemente 22, 45, 46 und 47 dargestellt sind, die wahlweise auf den Tragbolzen 24 aufgeschoben werden können.

Dichtelement 22 ist das bereits bekannte zylinderförmige Dichtelement, dessen zylinderförmige Oberfläche 28 in verschiedenen winkelmäßigen Ausgestaltungen unmittelbar als Ventilsitzfläche dient und zu diesem Zweck mit 5 zweiten Bohrungen 43 versehen ist.

Dichtelement 45 weist als Ventilsitzfläche 48 eine Kugeloberfläche auf, die wiederum in verschiedenen winkelmäßigen Ausgestaltungen unmittelbar mit einem jetzt kreisförmig ausgestalteten stirnseitigen Ende 21 des Steuerrohres 31 zusammenwirken kann.

Dichtelement 46 weist als Ventilsitzfläche fünf Planflächen auf. Dementsprechend sind dem in dem Dichtelementhalter 23 sitzenden und in Fig. 5 nicht zu erkennenden Passstift 42 auch insgesamt fünf zweite Bohrungen 43 zugeordnet, so dass das Dichtelement 46 in fünf verschiedenen winkelmäßigen Ausrichtungen um die Dichtelementachse 29 herum auf den Tragbolzen 24 aufgesteckt werden kann.

Dichtelement 47 schließlich weist als Dichtelementfläche 51 vier Kegelstümpfe auf, deren Mantelfläche 52 als Ventilsitzfläche dient. Dementsprechend sind an dem Dichtelement 47 vier zweite Bohrungen 43 vorgesehen.

Es sei noch erwähnt, dass sämtliche Dichtelemente 22, 45, 46, 47 rotationssymmetrisch zur Dichtelementachse 29 angeordnet sind.

Die Fig. 6 zeigt ein Koaxialventil 10 in einer Darstellung wie in Fig. 2, wobei hier die Betätigung über einen Elektromotor 54 erfolgt, der das Steuerrohr 31 zwischen seiner in Fig. 6 oben gezeigten Schließstellung und seiner in Fig. 6 unten gezeigten Offenstellung in Längsrichtung 30, also axial verschiebt und als Teil eines Strömungskanals 53 wirkt, der Eingangsanschluss 12 und Ausgangsanschluss 14 miteinander verbindet.Der Elektromotor 54 weist nicht dargestellte Motorwicklungen auf, die in Umfangsrichtung und in Längsrichtung fest in dem Ventilgehäuse 11 gelagert sind, das somit gleichzeitig den Stator des Elektromotors 54 bildet..

Mit anderen Worten, zumindest ein Teil des Ventilgehäuses 11 dient gleichzeitig als Stator 56 für den Elektromotor 54, wobei dieser Teil des Ventilgehäuses koaxial zu dem Rotor 55 angeordnet ist.

In dem so gebildeten Stator 56 sitzt drehbar ein Rotor 55, der an seinem Innenumfang 57 als Mutter, also mit Innengewinde 58 ausgebildet ist. Der Rotor 55 ist mit seinem Innengewinde 58 auf ein Außengewinde 59 aufgeschraubt ist, das außen an dem Steuerrohr 31 vorgesehen ist. Rotor 55 und Steuerrohr 31 bilden somit ein Schraubgetriebe.

Der Elektromotor 54 ist also mit seinem Stator - also dem entsprechenden Teil des Ventilgehäuses 11 - koaxial zu dem Rotor 55 angeordnet. Das Steuerrohr 31 ist koaxial in dem Elektromotor 54 angeordnet und steht über das Schraubgetriebe derart mit dessen Rotor 55 in Verbindung, dass eine Drehung des Rotors 55 zu einer axialen Verstellung des Steuerrohrs 31 führt.

In den Fig. 6 bis 8 ist der Elektromotor 54 lediglich schematisch angedeutet, auf die Darstellung von Dichtungen, Lagern, Befestigungsmitteln, elektrischen Anschlüssen und sonstigen, üblichen Komponenten wurde aus Gründen der Übersichtlichkeit verzichtet. Obwohl der Elektromotor 54 als Innenläufer, also mit innen in dem Stator 56 drehbar gelagerten Rotor 55 dargestellt ist, kann er auch als Außenläufer ausgestaltet sein.

Der Elektromotor 54 ist ein Servomotor beliebiger Bauart, der nach Art eines Torquemotors als getriebeloser Direktantrieb mit Hohlwelle ausgebildet ist.

Mit anderen Worten, der Rotor 55 des Elektromotors 54 weist eine zentrische Bohrung auf und ist als Mutter ausgebildet. Beim Drehen des Rotors 55 wird auf diese Weise das Steuerrohr 31 entsprechend der Steigung von Innen- und Außengewinde 58, 59 nach Art einer Gewindespindel verschoben. Wenn das Gewinde selbsthemmend ausgebildet ist, kann zwar durch Drehung des Rotors 55 das Steuerrohr 31 verschoben werden, das Steuerrohr 31 ist jedoch nicht in der Lage, den Rotor 55 zu verdrehen, selbst dann nicht, wenn die Motorwicklungen des Stators stromlos geschaltet sind.

In Fig. 6 oben ist das Koaxialventil 10 im geschlossenen Zustand gezeigt, das Steuerrohr 31 liegt also an dem Dichtelement 22 an, das in dem Ausführungsbeispiel der Fig. 6 eine Kugelfläche als Ventilsitzfläche 48 aufweist, es entspricht also dem Dichtelement 45 aus Fig. 5.

Ansonsten entspricht die Darstellung in der Fig. 6 der Darstellung der Fig. 2, wobei auch identische Bezugszeichen für identische Merkmale verwendet wurden, so dass insoweit auf die obige Beschreibung verwiesen werden darf.

Aufgrund des durch geeignete Wahl der Gewindesteigung selbsthemmenden Gewindes zwischen dem Steuerrohr 31 und dem Rotor 55 kann das Koaxialventil 10 aus Fig. 6 als Proportionalventil verwendet werden. In Abhängigkeit von dem Abstand des stirnseitigen Endes 21 des Steuerrohres 31 zu der Dichtfläche 48 kann zwischen dem maximalen Durchfluss - wie in Fig. 6 unten - und dem geschlossenen Zustand - wie in Fig. 6 oben - auch jeder beliebige Zwischenwert eigenommen werden, so dass veränderliche Volumenströme einstellbar sind.

Für die Einstellung eines derartigen Zwischenwertes kann einerseits ein Durchflussmesser vorgesehen sein, der in einer geschlossenen Regelschleife zusammen mit einem Stellantrieb dafür sorgt, dass das Steuerrohr den Abstand zu der Dichtfläche annimmt, der den entsprechenden Durchfluss gewährleistet. Der Elektromotor 54 kann danach stromlos geschaltet werden, da die axiale Position des Steuerrohres 31 wegen des selbsthemmenden Gewindes nicht verändert wird.

Alternativ oder zusätzlich zu dem Durchflussmesser kann auch ein Lagesensor für das Steuerrohr 31 vorgesehen sein, über den der Abstand zwischen dem stirnseitigen Ende 21 des Steuerrohres 31 sowie der Dichtfläche 48 gemessen wird. Auch dieser Messwert kann in einer Regelschleife dazu verwendet werden, einen gewünschten Abstand zwischen dem stirnseitigen Ende 21 des Steuerrohres 31 und der Dichtfläche 48 einzustellen.

Wenn das Koaxialventil 10 dann als Proportionalventil verwendet wird, muss die Abhängigkeit des Durchflusses von dem genannten Abstand in der Steuerung hinterlegt sein. Bei einem gewünschten Durchfluss kann dann aus einer Tabelle oder einer mathematischen Funktion der einzustellende Abstand zwischen dem stirnseitigen Ende 21 des Steuerrohres 31 und der Dichtfläche 48 ermittelt werden.

Der Elektromotor 54 bildet dann zusammen mit einem geeigneten Servorregler einen Servoantrieb, der über den Regelkreis positions- oder durchflussgeregelt ist.

Sofern das Ventil nicht als Proportionalventil eingesetzt werden soll, sind weder Durchflussmesser noch Wegmesssystem erforderlich, das Steuerrohr 31 wird dann lediglich zwischen den beiden Endlagen hin- und herbewegt, die in Fig. 6 gezeigt sind. Um sicherzustellen, dass die Endlagen erreicht sind, kann entweder die Motorwicklung für eine hinreichende Zeitdauer bestromt werden, oder der Stromfluss durch die Motorwicklung wird messtechnisch erfasst und anhand einer Änderung des Stromflusses erkannt, dass das Steuerrohr 31 eine seiner Endlagen erreicht hat und sich nicht weiterbewegt.

## Patentansprüche

1. Elektromotorisch betätigtes Ventil (10, 60, 70) mit einem Ventilgehäuse (11), an dem ein Eingangsanschluss (12) und zumindest ein Ausgangsanschluss (14) vorgesehen sind, zwischen denen sich ein Strömungskanal (53, 65) für ein durch das Ventil (10, 60, 70) zu leitendes Medium erstreckt, und mit einem über einen Elektromotor (54) betätigtes Stellglied (31, 62), das zum Verschließen des Strömungskanals (53, 65) mit einer Ventilsitzfläche (28, 48, 49, 52, 63, 73) zusammenwirkt, wobei das Stellglied (31, 62) koaxial in dem Elektromotor (54) angeordnet und derart mit dessen Rotor (55) in Verbindung steht, dass eine Drehung des Rotors (55) zu einer axialen Verstellung des Stellgliedes (31, 62) führt,
**dadurch gekennzeichnet, dass** an dem Stellglied (31, 62) ein Außengewinde (59) und an dem Rotor (55) ein im Eingriff mit dem Außengewinde (59) befindliches Innengewinde (58) vorgesehen ist, so dass Stellglied (31, 62) und Rotor (55) ein Schraubgetriebe bilden, und das Ventil (10, 60, 70) als Koaxialventil (10) und das Stellglied (31, 62) als in seiner Längsrichtung (30) verschieblich in dem Ventilgehäuse (11) gelagertes Steuerrohr (31) ausgebildet ist, das mit dem Eingangsanschluss (12) und dem Ausgangsanschluss (14) derart zusammenwirkt, dass es bei geöffnetem Koaxialventil (10) von dem Medium durchströmt wird, und das in einer seiner axialen Endlagen mit der Ventilsitzfläche (28, 48, 49, 52) zum Verschließen des Koaxialventils (10) zusammenwirkt.

2. Ventil nach Anspruch 1, **dadurch gekennzeichnet, dass** das Außengewinde (59) und das Innengewinde (58) ein selbsthemmendes Schraubgewinde bilden.

3. Ventil nach Anspruch 1 oder 2, **dadurch gekennzeichnet, dass** die Ventilsitzfläche (28, 48, 49, 52) an einem austauschbaren Dichtelement (22, 45, 46, 47) ausgebildet ist, das in einer im Wesentlichen quer zu der Längsrichtung (30) verlaufenden Öffnung (19) des Ventilgehäuses (11) angeordnet ist.

4. Ventil nach einem der Ansprüche 1 bis 3, **dadurch gekennzeichnet, dass** das Ventil (10, 60, 70) als Koaxialventil (10) und das Stellglied (31, 62) als in seiner Längsrichtung (30) verschieblich in dem Ventilgehäuse (11) gelagertes Steuerrohr (31) ausgebildet ist, das mit dem Eingangsanschluss (12) und dem Ausgangsanschluss (14) derart zusammenwirkt, dass es bei geöffnetem Koaxialventil (10) von dem Medium durchströmt wird, und das in einer seiner axialen Endlagen mit der Ventilsitzfläche (28, 48, 49, 52) zum Verschließen des Koaxialventils (10) zusammenwirkt, wobei die Ventilsitzfläche (28, 48, 49, 52) an einem vorzugsweise austauschbaren Dichtelement (22, 45, 46, 47) ausgebildet ist, an dem umfänglich um eine Dichtelementachse (29) verteilt zumindest zwei Ventilsitzflächen (28, 48, 49, 52) vorgesehen sind.

5. Ventil nach einem der Ansprüche 1 bis 4, **dadurch gekennzeichnet, dass** zumindest ein Teil des Ventilgehäuses 11 einen Stator des Elektromotors (54) bildet und dieser Teil des Ventilgehäuses (11) koaxial zu dem Rotor (55) angeordnet ist.

6. Ventil nach Anspruch 3 oder 4, **dadurch gekennzeichnet, dass** das Dichtelement (22, 45, 46, 47) an einem Dichtelementhalter (23) festgelegt ist, der lösbar an dem Ventilgehäuse (11) befestigt ist.

7. Ventil nach Anspruch 6, **dadurch gekennzeichnet, dass** das Dichtelement (22, 45, 46, 47) auf einem Tragbolzen (24) sitzt, der in der Öffnung (19) angeordnet ist und an seinem einen Ende (39) lösbar an dem Ventilgehäuse (11) festgelegt und an seinem anderen Ende an dem Dichtelementhalter (23) befestigt ist.

8. Ventil nach einem der Ansprüche 3 bis 7, **dadurch gekennzeichnet, dass** das Dichtelement (22, 45, 46, 47) rotationssymmetrisch zu einer Dichtelementachse (29) ausgebildet ist.

9. Ventil nach einem der Ansprüche 3 bis 8, **dadurch gekennzeichnet, dass** an dem Dichtelement (22, 45, 46, 47) umfänglich um eine Dichtelementachse (29) verteilt zumindest zwei Ventilsitzflächen (28, 48, 49, 52) vorgesehen sind.

10. Ventil nach einem der Ansprüche 3 bis 9, **dadurch gekennzeichnet, dass** zwischen Ventilgehäuse (11) und Dichtelement (22, 45, 46, 47) zumindest eine Positionieranordnung (42, 43) vorgesehen ist, die zumindest zwei umfängliche Ausrichtungen des Dichtelementes (22, 45, 46, 47) in dem Ventilgehäuse (11) festlegt.

11. Ventil nach Anspruch 10, **dadurch gekennzeichnet, dass** die Positionieranordnung (42, 43) einen Passstift (42) umfasst, der an seinem einen Ende fest in einer ersten Bohrung sitzt und an seinem anderen Ende mit um die Dichtelementachse (29) verteilt angeordneten zweiten Bohrungen 43 zusammenwirkt.

12. Ventil nach einem der Ansprüche 3 bis 11, **dadurch gekennzeichnet, dass** die oder jede Ventilsitzfläche (28, 48, 49, 52) an einer Zylinderfläche (28), Kugelfläche (48), Kegelmantelfläche (52) oder Planfläche (49) des Dichtelementes (22, 45, 46, 47) ausgebildet ist.

## Claims

1. Electromotively actuated valve (10, 60, 70) having a valve housing (11), on which housing an inlet connection (12) and at least one outlet connection (14) are provided, between which a flow duct (53, 65) for a medium to be conducted through said valve (10, 60, 70) extends, and with an actuating member (31, 62) which is actuated via an electric motor (54) and interacts with a valve seat face (28, 48, 49, 52, 63, 73) for closing said flow duct (53, 65), wherein the actuating member (31, 62) is arranged coaxially in said electric motor (54) and is connected to the rotor (55) thereof such that rotation of the rotor (55) effects axial displacement of the of the actuating member (31, 62),
**characterized in that** an external thread (59) is provided on the actuating member (31, 62) and an internal thread (58), that is in engagement with said external thread (59), is provided on said rotor (55), such that actuating member (31, 62) and rotor (55) form a screw mechanism, and that said valve (10, 60. 70) is embodied as an coaxial valve (10) and said actuating member (31, 62) is embodied as a control tube (31) which is mounted in said valve housing (11) so as to be movable in its longitudinal direction (30), which interacts with the inlet port (12) and the outlet port (14) in such a way that when the coaxial valve (10) is opened medium flows through the control tube, and which in one of its axial end positions interacts with said valve seat face (28, 48, 49, 52, 63, 73) for closing said coaxial valve (10).

2. Valve according to claim 1, **characterized in that** said external thread (59) and said internal thread (58) form a self-locking gear.

3. Valve according to claim 1 or 2, **characterized in that** the valve seat face (28, 48, 49, 52) is formed on a replaceable sealing element (22, 45, 46, 47) which is arranged in an opening (19) of the valve housing (11), said opening running essentially transversely with respect to the longitudinal direction (30).

4. Valve according to anyone of claims 1 to 3, **characterized in that** said valve (10, 60. 70) is embodied as an coaxial valve (10) and said actuating member (31, 62) is embodied as a control tube (31) which is mounted in said valve housing (11) so as to be movable in its longitudinal direction (30), which interacts with the inlet port (12) and the outlet port (14) in such a way that when the coaxial valve (10) is opened medium flows through the control tube, and which in one of its axial end positions interacts with said valve seat face (28, 48, 49, 52, 63, 73) for closing said coaxial valve (10), the valve seat face (28, 48, 49, 52) being formed on a preferably replaceable sealing element (22, 45, 46, 47) on which at least two valve seat faces (28, 48, 49, 52) are provided and distributed circumferentially around a sealing element axis (29).

5. Valve according to anyone of claims 1 to 4, **characterized in that** at least a part of said valve housing (11) forms a stator of said electric motor (54), and that this part of the valve housing 811) is arranged coaxial to said rotor (55).

6. Valve according to claim 3 or 4, **characterized in that** that the sealing element (22, 45, 46, 47) is secured to a sealing element holder (23) which is attached in a releasable fashion to the valve housing (11).

7. Valve according to claim 6, **characterized in that** the sealing element (22, 45, 46, 47) is seated on a supporting bolt (24) which is arranged in the opening (19) and is secured in a releasable fashion at its one end (39) to the valve housing (11) and is attached at its other end to the sealing element holder (23).

8. Valve according to anyone of claims 3 to 7, **characterized in that** the sealing element (22, 45, 46, 47) is embodied so as to be rotationally symmetrical with respect to a sealing element axis (29).

9. Valve according to anyone of claims 3 to 8, **characterized in that** at least two valve seat faces (28, 48, 49, 52) are provided on the sealing element (22, 45, 46, 47), distributed circumferentially around a sealing element axis (29).

10. Valve according to anyone of claims 3 to 9, **characterized in that** between the valve housing (11) and the sealing element (22, 45, 46, 47) at least one positioning arrangement (42, 43) is provided, which secures at least two circumferential orientations of the sealing element (22, 45, 46, 47) in the valve housing (11).

11. Valve according to claim 10, **characterized in that** the positioning arrangement (42, 43) comprises an alignment pin (42), which is secured seated at its one end in a first drilled hole and at its other end interacts with second drilled holes (43), which are arranged distributed around the sealing element axis (29).

12. Valve according to anyone of claims 3 to 11, **characterized in that** the or each valve seat face (28, 48, 49, 51) is formed on a cylindrical face (28), a spherical face (48), a cone envelope face (52) or a planar face (49) of the sealing element (22, 45, 46, 47).

## Revendications

1. Soupape (10, 60, 70) électromotorisée comprenant un carter de soupape (11), au niveau duquel sont prévus un raccord d'entrée (12) et au moins un raccord de sortie (14), entre lesquels s'étend un canal d'écoulement (53, 65) pour acheminer un fluide à travers la soupape (10, 60, 70), et comprenant un organe de réglage (31, 62) actionné par l'intermédiaire d'un moteur électrique (54), lequel organe de réglage coopère avec une surface de siège de soupape (28, 48, 49, 52, 63, 73) pour fermer le canal d'écoulement (53, 65), sachant que l'organe de réglage (31, 62) est disposé de manière coaxiale dans le moteur électrique (54) et est relié de telle manière au rotor (55) dudit moteur électrique qu'une rotation du rotor (55) entraîne un déplacement axial de l'organe de réglage (31, 62),
**caractérisée en ce qu'**un filetage extérieur (59) est prévu au niveau de l'organe de réglage (31, 62) et qu'un filetage intérieur (58) se trouvant en prise avec le filetage extérieur (59) est prévu au niveau du rotor (55) de sorte que l'organe de réglage (31, 62) et le rotor (55) forment un engrenage hélicoïdal, et **en ce que** la soupape (10, 60, 70) est réalisée sous la forme d'une soupape coaxiale (10) et l'organe de réglage (31, 62) est réalisé sous la forme d'un tube de commande (31) monté dans le carter de soupape (11) de manière à pouvoir être déplacé par coulissement dans sa direction longitudinale (30), lequel tube de commande coopère avec le raccord d'entrée (12) et le raccord de sortie (14) de telle manière qu'il est traversé, lorsque la soupape coaxiale (10) est ouverte, par le fluide et qu'il coopère, dans l'une de ses positions finales axiales, avec la surface de siège de soupape (28, 48, 49, 52) servant à fermer la soupape coaxiale (10).

2. Soupape selon la revendication 1, **caractérisée en ce que** le filetage extérieur (59) et le filetage intérieur (58) forment un filetage de vissage autobloquant.

3. Soupape selon la revendication 1 ou 2, **caractérisée en ce que** la surface de siège de soupape (28, 48, 49, 52) est réalisée au niveau d'un élément d'étanchéité (22, 45, 46, 47) remplaçable, qui est disposé dans une ouverture (19), s'étendant essentiellement de manière transversale par rapport à la direction longitudinale (30), du carter de soupape (11).

4. Soupape selon l'une quelconque des revendications 1 à 3, **caractérisée en ce que** la soupape (10, 60, 70) est réalisée sous la forme d'une soupape coaxiale (10) et l'organe de réglage (31, 62) est réalisé sous la forme d'un tuyau de commande (31) monté dans le carter de soupape (11) de manière à pouvoir être déplacé par coulissement dans sa direction longitudinale (30), lequel tuyau de commande coopère avec le raccord d'entrée (12) et le raccord de sortie (14) de telle manière qu'il soit traversé, lorsque la soupape coaxiale (10) est ouverte, par le fluide, et qui coopère, dans l'une de ses positions finales axiales, avec la surface de siège de soupape (28, 48, 49, 52) servant à fermer la soupape coaxiale (10), sachant que la surface de siège de soupape (28, 48, 49, 52) est réalisée au niveau d'un élément d'étanchéité (22, 45, 46, 47) de préférence remplaçable, au niveau duquel sont prévues, de manière répartie sur la périphérie autour d'un axe d'élément d'étanchéité (29), au moins deux surfaces de siège de soupape (28, 48, 49, 52).

5. Soupape selon l'une quelconque des revendications 1 à 4, **caractérisée en ce qu'**au moins une partie du carter de soupape (11) forme un stator du moteur électrique (54), et **en ce que** cette partie du carter de soupape (11) est disposée de manière coaxiale par rapport au rotor (55).

6. Soupape selon la revendication 3 ou 4, **caractérisée en ce que** l'élément d'étanchéité (22, 45, 46, 47) est placé au niveau d'un support d'élément d'étanchéité (23), qui est fixé de manière amovible au niveau du carter de soupape (11).

7. Soupape selon la revendication 6, **caractérisée en ce que** l'élément d'étanchéité (22, 45, 46, 47) repose sur un boulon porteur (24), qui est disposé dans l'ouverture (19) et qui est placé, par l'une de ses extrémités (39), de manière amovible au niveau du carter de soupape (11) et est fixé, par son autre extrémité, au niveau du support d'élément d'étanchéité (23).

8. Soupape selon l'une quelconque des revendications 3 à 7, **caractérisée en ce que** l'élément d'étanchéité (22, 45, 46, 47) est réalisé de manière symétrique en rotation par rapport à un axe d'élément d'étanchéité (29).

9. Soupape selon l'une quelconque des revendications 3 à 8, **caractérisée en ce qu'**au moins deux surfaces de siège de soupape (28, 48, 49, 52) sont prévues au niveau de l'élément d'étanchéité (22, 45, 46, 47) de manière répartie sur la périphérie autour d'un axe d'élément d'étanchéité (29).

10. Soupape selon l'une quelconque des revendications 3 à 9, **caractérisée en ce qu'**est prévu, entre le carter de soupape (11) et l'élément d'étanchéité (22, 45, 46, 47), au moins un ensemble de positionnement (42, 43), qui détermine au moins deux orientations périphériques de l'élément d'étanchéité (22, 45, 46, 47) dans le carter de soupape (11).

11. Soupape selon la revendication 10, **caractérisée en ce que** l'ensemble de positionnement (42, 43) comprend un goujon d'assemblage (42), qui repose par l'une de ses extrémités de manière fixe dans un premier alésage et qui coopère, par son autre extrémité, avec des deuxièmes alésages (43) disposés de manière répartie autour de l'axe d'élément d'étanchéité (29).

12. Soupape selon l'une quelconque des revendications 3 à 11, **caractérisée en ce que** la surface de siège de soupape ou chaque surface de siège de soupape (28, 48, 49, 52) est réalisée, au niveau d'une surface cylindrique (28), au niveau d'une surface sphérique (48), au niveau d'une surface extérieure conique (52) ou d'une surface plane (49) de l'élément d'étanchéité (22, 45, 46, 47).
